# EUROPEAN PATENT SPECIFICATION

(11) **EP 2 237 989 B1**
(45) Date of publication and mention of the grant of the patent: **24.08.2011**
(21) Application number: 09705002.5
(22) Date of filing: 28.01.2009
(51) Int. Cl.: B60R 1/10, B60R 1/02, B60R 1/06, B60R 1/08

(54) **OBLIQUE FORWARD VISION DEVICE FOR VEHICLE**
SCHRÄGVORWÄRTSSICHTGERÄT FÜR FAHRZEUGE
DISPOSITIF DE VISION OBLIQUE VERS L'AVANT POUR VÉHICULE

(30) Priority: 28.01.2008 JP 2008016636
(43) Date of publication of application: 13.10.2010
(73) Proprietor: Honda Motor Co., Ltd., Minato-ku Tokyo 107-8556 (JP)
(72) Inventor: MATSUMOTO, Yoshiyuki, Wako-shi Saitama 351-0193 (JP); KISHIMOTO, Yuya, Wako-shi Saitama 351-0193 (JP)
(74) Representative: Prechtel, Jörg
(86) International application number: PCT/JP2009/051819
(87) International publication number: WO 2009/096587

(56) References cited:
- WO-A-2008/003134
- AU-B2- 2004 210 715
- DE-A1- 3 807 549
- US-A- 2 132 026

## Description

### TECHNICAL FIELD

The present invention relates to an oblique forward vision device for a vehicle, which allows a driver to see a blind spot located in a diagonally forward direction of a vehicle and obstructed by a front pillar of the vehicle.

### BACKGROUND ART

A mirror or a camera is ordinarily used as an oblique forward vision device for a vehicle. For example, JP 2004-255915 A discloses a mirror-based device.

In the mirror-based device, a first mirror for showing an object in front of the vehicle is provided on a sub-pillar extending downwardly from an intermediate part of a front pillar. A second mirror is provided on the front pillar which is positioned forwardly of the sub-pillar.

An object diagonally in front of the vehicle in a blind spot blocked by the front pillar is shown in the first mirror. The image shown in the first mirror is reflected off the first mirror toward the second mirror and is shown in the second mirror. The image shown in the second mirror.is reflected off the second mirror toward the eyes of a driver, whereby the second mirror allows the driver to see the object diagonally in front of the vehicle.

However, with the mirror arrangement disclosed in JP 2004-255915 A, a problem is presented in that the driver cannot see objects that are on the outside of a front body and the area near the outside body, as well as the area near the front wheels. An oblique forward vision device comprising the features of the preamble of claim1 is known from WO2008/003134 A1.

### DISCLOSURE OF THE INVENTION

An object of the invention is to provide an oblique forward vision device for a vehicle wherein a side portion of a front body of a vehicle (a front fender, for example) and areas around the side portion of the front body can be visually recognized in order to reduce an area constituting a blind spot for a vehicle occupant.

According to an aspect of the present invention, there is provided an oblique forward vision device for a vehicle having a door mirror disposed on a vehicle portion located rearwardly of a front pillar, comprising: a first reflective mirror provided in a mirror housing holding a mirror member of the door mirror, such that an object in an area ranging from beneath the door mirror to a side and front of the vehicle is shown; and a second reflective mirror provided on an interior side surface of the front pillar such that light reflected off the first reflective mirror is reflected toward a vehicle occupant.

The second reflective mirror positioned at the front pillar accordingly allows a driver to view a side portion (front fender) of a front body of the vehicle and an object around the side portion, which constitute a blind spot for the driver. The second reflective mirror positioned at the front pillar can therefore reduce the area constituting a blind spot for the driver.

The vehicle also includes a sub-window pane supported by the front pillar and a sub-pillar extending downward from the front pillar partway therealong in the vertical direction; the door mirror is disposed in the vicinity of a lower portion of the sub-pillar; and the second reflective mirror reflects the light reflected off the first reflective mirror toward the vehicle occupant via the sub-window pane.

Desirably, the second reflective mirror is provided at a lower end portion of the interior surface of the front pillar. Therefore, the driver can view the second reflective mirror along the line of sight toward the area around the side portion of the front body, and the distance over which the driver moves his line of sight can be reduced.

In a preferred form, the second reflective mirror includes a pivotable reflective mirror member. The second reflective mirror can therefore be adjusted to be aimed at the eyes of the driver.

Preferably, the first reflective mirror is formed by applying a mirror finish to the mirror housing. The first reflective mirror can therefore be readily formed.

Desirably, the door mirror is capable of pivoting on the door and being switched between an unfolded state when the door mirror is used and a folded state when the door mirror is not used, and the first reflective mirror includes a first reflective portion for showing the object when the door mirror is unfolded and a second reflective portion for showing the object when the door mirror is folded. Therefore, the second reflective portion allows an object in the blind spot around the side portion of the front body of the vehicle to be presented in the second reflective mirror even when the door mirror folded. The area constituting a blind spot for the driver can therefore be reduced. Further, when the vehicle is parked on a narrow street, and the door mirror is folded, an area around the side portion (front fender) of the front body can be visually recognized.

In a preferred form, the second reflective portion has a surface shape substantially the same as the surface shape of the first reflective portion, and shows an image substantially the same as an image shown in the first reflective portion. Therefore, even when the door mirror is folded, an image can be shown in the second reflective mirror, as in a case where the door mirror is not folded but unfolded.

Preferably, a window alignment mark is provided on the sub-window pane, a mirror alignment mark is provided on the pivotable reflective mirror member in the second reflective mirror; and the second reflective mirror is positioned by pivoting the reflective mirror member so that the mirror alignment mark coincides with the window alignment mark shown in the reflective mirror member. The angle of the second reflective mirror can therefore be readily adjusted. Further, the blind spot can be shown in the second reflective mirror in such a way that a central portion of the blind spot is aligned with the center of the second reflective mirror, whereby variation in the area shown in the second reflective mirror is reduced.

Desirably, when the window alignment mark shown in the second reflective mirror coincides with the mirror alignment mark, the position of the superimposed marks coincides with a front end portion of the vehicle shown in the second reflective mirror. Therefore, the driver can readily identify the distance from an object in the blind spot to the front end portion of the vehicle.

Preferably, an edge of the second reflective mirror is used as the mirror alignment mark, and the window alignment mark includes an outer frame that substantially coincides with the edge, and a plurality of scale lines drawn in the outer frame at desired intervals. The positioning of the second reflective mirror is completed when the edge of the second reflective mirror substantially coincides with the outer frame of the window alignment mark, and a central portion of the area constituting a blind spot for the driver can be substantially aligned with the center of the second reflective mirror. Further, the scale lines allow the driver to readily know the distance between objects in the blind spot, the distance from an object to the side portion of the front body, and the distance from an object to the front end portion of the front body.

### BRIEF DESCRIPTION OF THE DRAWINGS

FIG. 1 is a perspective view showing an oblique forward vision device for a vehicle, according to a first embodiment of the present invention;
FIG. 2 shows a case where a first reflective mirror is provided on the rear side of a door mirror of FIG. 1;
FIG. 3 is a cross-sectional view taken along line 3-3 of FIG. 1;
FIGS. 4A and 4B show the manner in which the oblique forward vision device according to the first embodiment allows a driver to see a state diagonally in front of a vehicle;
FIG. 5 is a detailed view as seen in the direction of arrow 5 of FIG. 4A;
FIGS. 6A and 6B show an oblique forward vision device according to a second embodiment of the present invention, in which two reflective portions are provided in an associated door mirror;
FIGS. 7A and 7B show an oblique forward vision device according to a third embodiment of the present invention, illustrating a manner in which a second reflective mirror is aligned;
FIG. 8 is an enlarged view of area 8 of FIG. 7B;
FIGS. 9A and 9B are schematic views of an oblique forward vision device according to a fourth embodiment of the present invention, illustrating a manner in which a second reflective mirror is aligned as in the third embodiment; and
FIG. 10 is a schematic view of an oblique forward vision device according to a fifth embodiment of the present invention, illustrating a case where a plurality of scale lines is drawn on a second reflective mirror.

### BEST MODE FOR CARRYING OUT THE INVENTION

Certain preferred embodiments of the present invention will now be described in detail with reference to the accompanying drawings, in which:

### (First Embodiment)

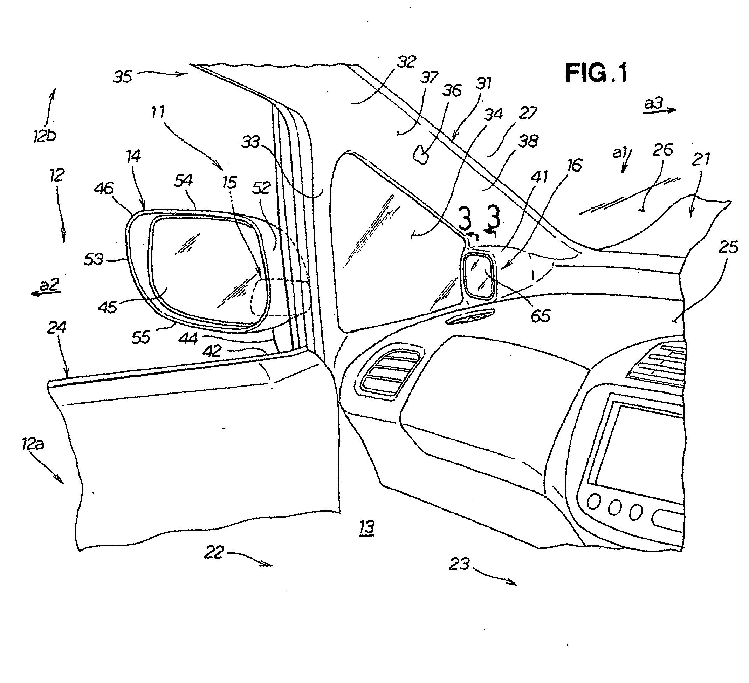

Reference is made to FIGS. 1 to 5 showing an oblique forward vision device according to a first embodiment of the present invention.

The oblique forward vision device 11 allows a vehicle occupant to see an area to the left front of a vehicle 12 (in the direction indicated by arrow a1). An image shown in a first reflective mirror 15 provided in a door mirror 14 outside a passenger compartment 13 is reflected off the first reflective mirror 15 and shown in a second reflective mirror 16 provided in the passenger compartment 13.

The vehicle 12 includes a front body 21, the passenger compartment 13, a passenger seat 22, a driver seat 23, a left door 24, an instrument panel 25, a front windshield 26, front main pillars 31 for supporting right and left ends 27 of the front windshield 26, a sub-pillar 33 extending downward from an intermediate location of each of the front main pillars 31, and a sub-window pane 34 that is supported by each of the sub-pillars 33 and front main pillars 31.

The front main pillar 31, which has the sub-pillar 33 extending downward from an intermediate location of the front main pillar 31 connected to a roof rail 12b of a vehicle body 12a, includes a front pillar member 36 molded integrally with a steel side body 35, and a front pillar interior member 37 made of resin and attached to the surface of the front pillar member 36. A cover 41 for the second mirror 16 is molded integrally with the front pillar interior member 37.

An "interior side surface 38 of the front pillar 31" is a surface 38 of the front pillar interior member 37 that faces the passenger compartment 13 and is connected to the cover 41.

In the area of the driver seat 23, there are a side mirror operation unit (not shown) for adjusting the angle of the second reflective mirror 16, and a door mirror turning operation unit (not shown) for turning the door mirror 14 toward the vehicle body and then returning the door mirror 14.

The door mirror 14 is located outside the passenger compartment 13 and includes a support 44 attached to an upper front portion 42 of the left door 24, a mirror member 45 for reflecting light to show an image of an area behind the vehicle (in the direction indicated by arrow a2), and a mirror housing 46 for housing the mirror member 45.

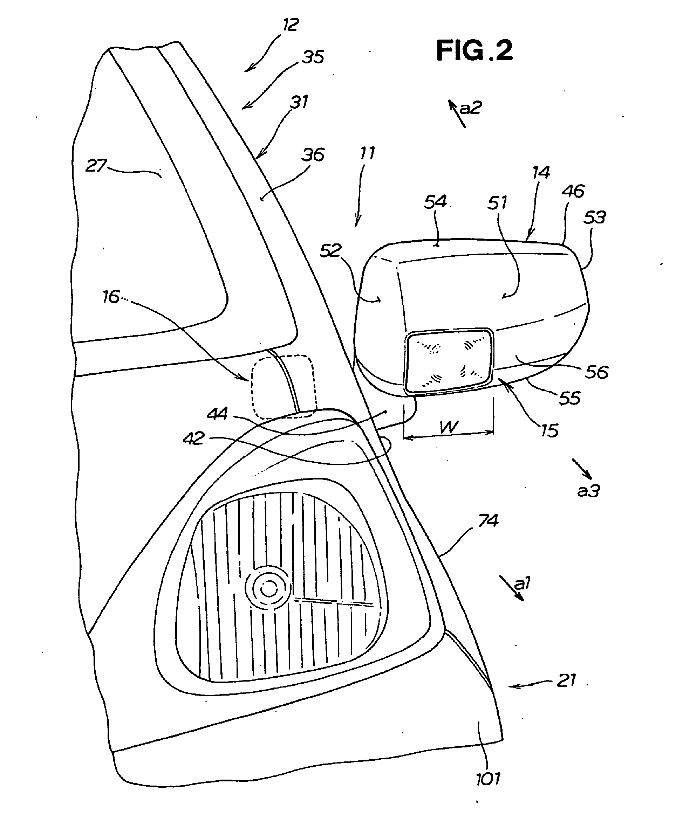

Referring to FIGS. 1 and 2, the mirror housing 46 is made of resin molded into a substantially rectangular box shape, and includes a forward portion 51 (a rear portion of the door mirror) oriented in the forward direction of the vehicle 12 (in the direction indicated by arrow a3), an inside portion 52 connected to the forward portion 51, an outside portion 53, a top portion 54, and a bottom portion 55. The first reflective mirror 15 is provided in a lower portion 56 of the front surface 51.

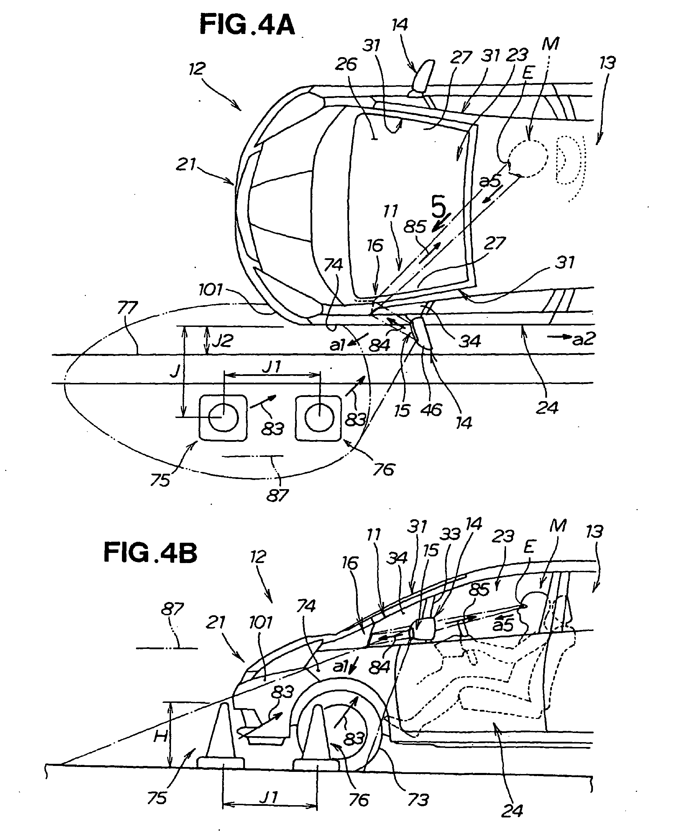

The first reflective mirror 15 is a convex mirror, which is painted so that the convex surface shines similarly to a mirror. The radius of the convex mirror and the orientation of the convex surface of the first reflective mirror 15 are designed in such a way that the second reflective mirror 16 shows an area in the lower left front of the vehicle 12 (see area 87 in FIG. 4).

The surface of the first reflective mirror 15 is a painted resin surface, but the first reflective mirror 15 can alternatively be a convex mirror made of glass or metal.

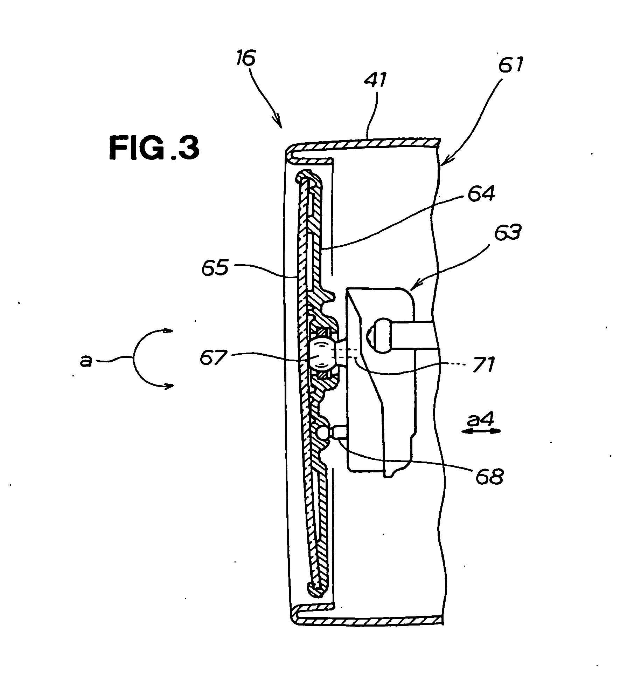

As shown in FIGS. 1 and 3, the second reflective mirror 16 is disposed in the passenger compartment 13 (FIG. 1), specifically in a lower end portion 61 of the front main pillar 31 (FIG. 1) where the front main pillar 31 intersects the instrument panel 25. The second reflective mirror 16 includes a mirror angle adjustment mechanism 63 attached to the steel front pillar member 36, a mirror holder 64 supported by the mirror angle adjustment mechanism 63, a mirror member 65 supported by the mirror holder 64, and a side mirror operation unit (not shown) operated manually by the driver to adjust the angle of the mirror member 65.

The mirror angle adjustment mechanism 63 includes a spherical swing pivotal point 67 for swingably supporting the mirror holder 64 at the center thereof, a first drive rod 68 provided under the swing pivotal point 67 and fitted in the mirror holder 64, and a second drive rod 71 provided outward from the swing pivotal point 67 in the vehicle width direction and fitted in the mirror holder 64.

When an electric motor (not shown) moves the first drive rod 68 forward or rearward (in the direction indicated by arrow a4) based on angular information output from the side mirror operation unit disposed in the driver seat area, the mirror member 65 pivots vertically (in the direction indicated by arrow a) around the swing pivotal point 67. When the second drive rod 71 moves forward or rearward (in the direction indicated by arrow a4), the mirror member 65 pivots horizontally (in the direction perpendicular to the plane of view of FIG. 3).

The mirror member 65 is a flat mirror. The outer shape of the mirror member 65 is rectangular in the embodiment illustrated in the drawings, but this shape is not the only possible option. The outer shape may alternatively be circular.

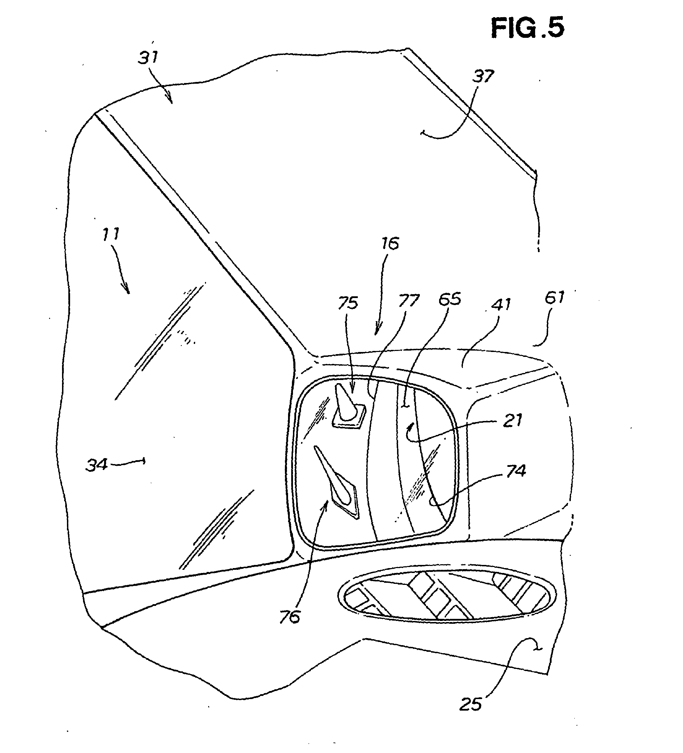

The operation of the oblique forward vision device 11 according to the first embodiment will be described with reference to FIGS. 4A, 4B, and 5.

As shown in FIGS. 4A and 4B, a first object 75 and a second object 76 are disposed in a lower left front of the vehicle 12 (in the direction indicated by arrow a1), i.e., in the vicinity of the front left wheel 73.

J is the distance from a side portion (front fender) 74 of the front body 21 of the vehicle 12 to the first and second objects 75, 76, J1 is the distance from the first object 75 to the second object 76 (approximately 400 mm), H is the height of each of the first and second objects 75, 76 (approximately 400 mm), and J2 is the distance from the front body 21 to a white line 77. The driver M is assumed to have a standard height (e.g., 1720 mm).

When the driver M seated on the driver seat 23 turns diagonally leftward (in the direction indicated by arrow a5) and looks at the second reflective mirror 16, the oblique forward vision device 11 allows first reflected light 83 reflected off the first and second objects 75, 76, which are in a blind spot, to reach the eyes E of the driver M via the first reflective mirror 15 and second reflected light 84. The driver can therefore see the first and second objects 75, 76 in the second reflective mirror 16.

Specifically, the first reflective mirror 15 converts the first reflected light 83 reflected off the first and second objects 75, 76 into the second reflected light 84. The second reflected light 84 reaches the second reflective mirror 16, whose angle has been pre-adjusted through the side mirror operation unit (not shown) in the driver seat 23. The second reflective mirror 16 then converts the second reflected light 84 into third reflected light 85, which reaches the eyes E and allows the driver to see the blind spot, as shown in FIG. 5. The area constituting a blind spot for the driver M is therefore reduced.

In the oblique forward vision device 11, the second reflective mirror 16 can thus show objects in the area 87 located in the lower left front of the vehicle 12 and constituting a blind spot for the driver. Specifically, the second reflective mirror 16 allows the driver to visually recognize the side portion (front fender) 74 of the front body 21 of the vehicle 12, and the area around the side portion (front fender) 74 including the white line 77 in the vicinity of the front left wheel 73 and the first and second objects 75, 76.

Further, since the second reflective mirror 16 is attached to the lower end 61 of the front pillar interior member 37 of the front main pillar 31, the driver can view the second reflective mirror 16 along the line of sight (in the direction indicated by arrow a5) toward the area around the side portion front fender) 74 of the front body 21, and the distance over which the driver moves his line of sight can be reduced.

Since the first reflective mirror 15 is formed by molding part of the mirror housing 46 into a convex shape and painting the convex portion so that the convex portion acts as a mirror, the first reflective mirror 15 can be readily formed.

Since the second reflective mirror 16 is pivotally attached so that the angle of the reflective mirror member 65 is adjusted, the angle of the second reflective mirror 16 can be adjusted to be aimed at the eyes E of the driver M.

The first reflective mirror 15 is formed by forming a convex mirror in the lower portion 56 of the mirror housing 46 and painting the convex mirror so that the convex portion acts as a mirror. The first reflective mirror 15 can therefore be readily formed.

### (Second Embodiment)

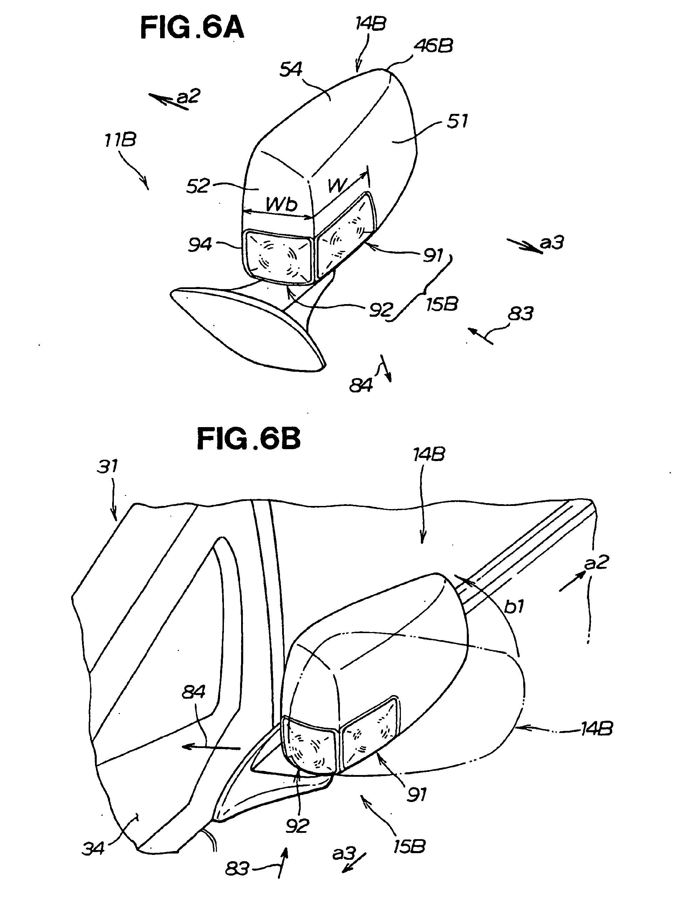

An oblique forward vision device 11B according to a second embodiment of the present invention will now be described with reference to FIGS. 6A and 6B. Configurations that are the same as those in the first embodiment have the same reference characters, and a description thereof is accordingly omitted.

A door mirror 14B of the oblique forward vision device 11B according to the second embodiment includes a mirror housing 46B and a first reflective mirror 15B having two reflective portions.

The first reflective mirror 15B includes a first reflective portion 91 for showing an object in the area 87 (FIG. 4A) constituting a blind spot for the driver when the door mirror 14B is used (unfolded), and a second reflective portion 92 for showing the object in the area 87 constituting a blind spot for the driver when the door mirror 14B is not used (folded).

"When the door mirror is used" refers to a state in which the door mirror 14B is unfolded to allow an area behind the vehicle 12 (in the direction indicated by arrow a2) to be visually recognized, whereas "when the door mirror is not used" refers to a state in which the door mirror 14B is folded toward the door, as shown in FIG. 6B.

The first reflective portion 91 is the same as the first reflective mirror 15 in the first embodiment shown in FIG. 2.

The second reflective portion 92 is formed by forming a convex mirror in a lower outer surface 94 of the inside portion 52 of the mirror housing 46B and painting the convex mirror so that the convex surface shines like a mirror. The radius of the convex mirror and the orientation of the convex surface of the second reflective portion 92 are designed in such a way that the second reflective mirror 16 (FIG. 1) shows an area in the lower left front of the vehicle (see the area 87 in FIG. 4) in a state in which the door mirror 14B is pivoted and folded as indicated by arrow b1 in the manner shown in FIG. 6B.

With the door mirror 14B thus pivoted and folded as indicated by arrow b1, the second reflective portion 92 is disposed at the same location as the first reflective mirror 15 in the first embodiment, and the focal point of the second reflective portion 92 coincides with that of the first reflective mirror 15.

Since the inside portion 52 of the door mirror 14B is small, the width Wb (FIG. 6A) of the second reflective portion 92 is smaller than the width W (FIG. 2) of the first reflective mirror 15. In this case, an existing mirror housing can be used, and the door mirror 14B is readily manufactured.

The width Wb of the second reflective portion 92 may be the same as the width W of the first reflective mirror 15. In this case, the size of the inside portion 52 can be increased.

An operation of the oblique forward vision device 11B according to the second embodiment will be described below.

In the oblique forward vision device 11B according to the second embodiment, when the door mirror 14B shown in FIG. 6A is used, the first reflective portion 91 reflects the first reflected light 83 reflected off the first and second objects 75, 76 toward the second reflective mirror 16 as the second reflected light 84 in the manner shown in FIGS.4A and 4B, similar to the first reflective mirror 15 in the first embodiment. The second reflective mirror 16 converts the second reflected light 84 into the third reflected light 85, which reaches the eyes E of the driver M. Therefore, as shown in FIG. 5, an area constituting a blind spot for the driver can be viewed, and the driver can visually recognize the blind spot. The area constituting a blind spot the driver M is therefore reduced in size.

In the oblique forward vision device 11B according to the second embodiment, as shown in FIG. 6B, the second reflective portion 92 of the folded door mirror 14B provides the same advantageous effect as that of the first reflective portion 91 (first reflective mirror 15).

As described above, since the first reflected light 83 reflected off the first and second objects 75, 76 is reflected as the second reflected light 84 toward the second reflective mirror 16, the second reflective mirror 16 converts the second reflected light 84 into the third reflected light 85, which reaches the eyes E of the driver.

As described above, according to the oblique forward vision device 11B according to the second embodiment, the second reflective portion 92 allows objects in the blind spot 87 around the side portion (front fender) 74 of the front body 21 of the vehicle 12 to be presented in the second reflective mirror 16 even when the door mirror 14B folded. The area constituting a blind spot the driver is therefore reduced.

Further, since the second reflective portion 92 is disposed in such a way that the convex surface, the height, and other conditions are the same as those of the first reflective mirror 15, the second reflective mirror 16 can show images of objects even when the door mirror 14B is folded, as in the case where the door mirror 14B is used.

### (Third Embodiment)

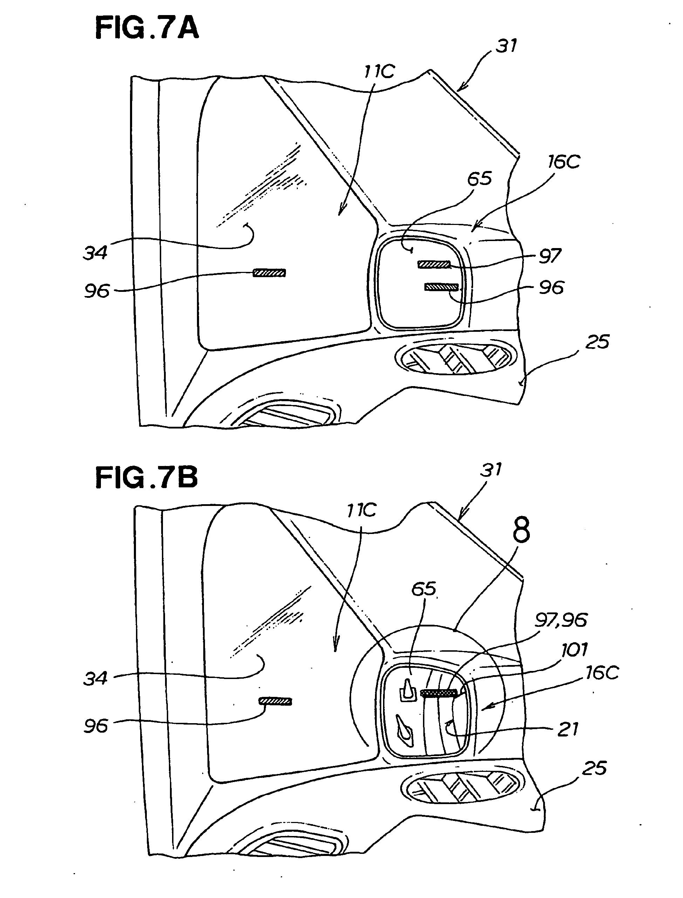

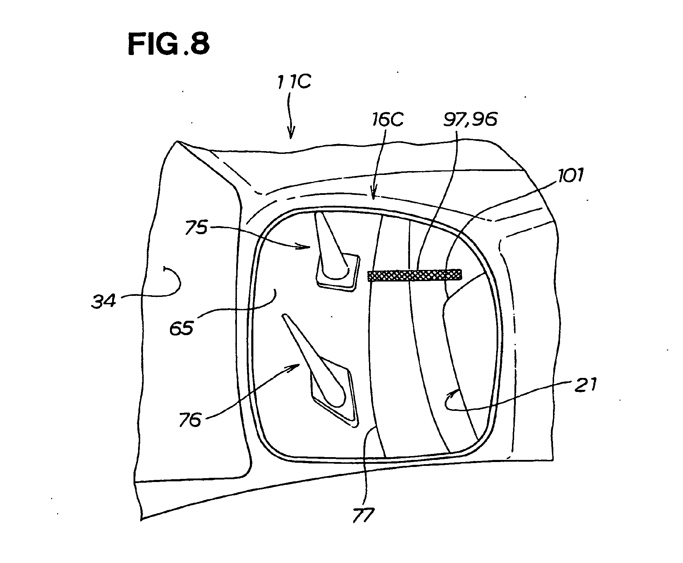

FIGS. 7A, 7B, and 8 show an oblique forward vision device 11C according to a third embodiment of the present invention. Configurations that are the same as those in the oblique forward vision device according to the first embodiment have the same reference characters and a description thereof is accordingly omitted.

In the oblique forward vision device 11C according to the third embodiment, a window alignment mark 96 is provided on the sub-window pane 34, and a mirror alignment mark 97 is provided on a second reflective mirror 16C. The angle of the second reflective mirror 16C is adjusted so that the mirror alignment mark 97 coincides with the window alignment mark 96 shown in the second reflective mirror 16C.

The mirror alignment mark 97 is a line drawn on an upper portion of the reflective mirror member 65. Specifically, as shown in FIG. 8, the mirror alignment mark 97 is a line drawn substantially through a front end portion 101 of the front body 21 shown in the reflective mirror member 65 in a state in which the front body 21 of the vehicle 12 is shown in a range that is about 20% of the reflective mirror member 65, and the front end portion 101 of the front body 21 is shown in the upper right corner of the reflective mirror member 65. At the same time, the center of the blind spot 87 is shown along the center of the reflective mirror member 65.

The window alignment mark 96 is a line drawn at the center. Specifically, the window alignment mark 96 is a line drawn in a predetermined position on the sub-window pane 34 in such a way that the window alignment mark 96 coincides with the mirror alignment mark 97 when the angle of the reflective mirror member 65 is adjusted as shown in FIG. 7B.

An operation of the oblique forward vision device 11C according to the third embodiment will be described below.

The position or angle of the second reflective mirror 16C shown in FIG. 7A does not allow the area constituting a blind spot the driver to be shown, and hence needs to be adjusted.

The position of the reflective mirror member 65 is adjusted by operating the side mirror operation unit (not shown) provided in the driver seat 23 in such a way that the adjusted angle allows the blind spot to be shown.

As shown in FIG. 7B, the positioning of the second reflective mirror 16C is completed when the mirror alignment mark 97 drawn on the second reflective mirror 16C coincides with the window alignment mark 96 shown in the second reflective mirror 16C.

As shown in FIG. 8, since the marks that coincide with each other coincide with the front end portion 101 of the vehicle, the driver can readily identify the distance from the objects 75 and 76 in the blind spot to the front end portion 101 of the vehicle.

Aligning the mirror alignment mark 97 with the window alignment mark 96 shown in the reflective mirror member 65 allows the center of the blind spot 87 (FIGS. 4A and 4B) to substantially coincide with the substantial center of the second reflective mirror 16C.

### (Fourth Embodiment)

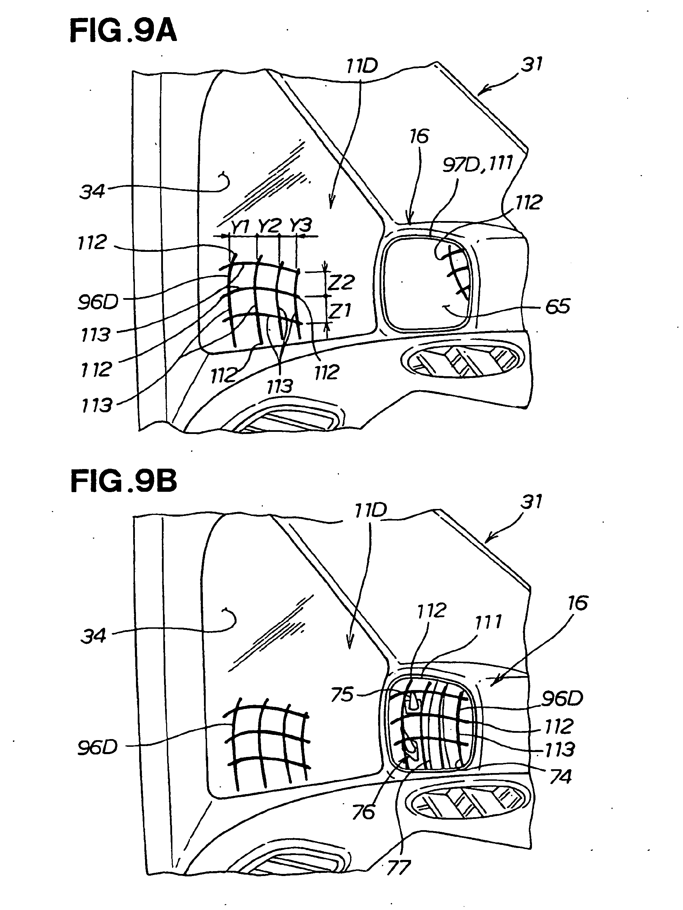

FIGS. 9A and 9B show an oblique forward vision device 11D according to a fourth embodiment of the present invention. Configurations that are the same as those in the first embodiment shown in FIGS. 1 to 5 have the same reference characters, and a description thereof is accordingly omitted.

In the oblique forward vision device 11D according to the fourth embodiment, the edge 111 of the second reflective mirror 16 is used as a mirror alignment mark 97D, and a window alignment mark 96D includes an outer frame 112 that substantially coincides with the edge 111, and scale lines 113 drawn in the outer frame 112 at desired intervals Y1, Y2, Y3, Z1, and Z2. Each of the scale lines 113 starts from the outer frame 112 and ends at the outer frame 112.

An operation of the oblique forward vision device 11D according to the fourth embodiment will be described below.

The position or angle of the second reflective mirror 16 shown in FIG. 9A does not allow the blind spot to be shown, and hence needs to be adjusted.

The position of the reflective mirror member 65 is adjusted by operating the side mirror operation unit (not shown) provided in the driver seat 23 in such a way that the adjusted angle allows the blind spot to be shown.

As shown in FIG. 9B, the positioning of the second reflective mirror 16 is completed by adjusting the angle of the reflective mirror member 65 in such a way that the edge 111 of the second reflective mirror 16 substantially coincides with the outer frame 112 of the window alignment mark 96D shown in the second reflective mirror 16. The center of the blind spot 87 (FIGS. 4A and 4B) can be substantially aligned with the center of the second reflective mirror 16.

Having the edge 111 substantially aligned with the outer frame 112 of the window alignment mark 96D shown in the second reflective mirror 16 allows the scale lines 113 to coincide with the side portion (front fender) 74 of the front body 21 shown in FIG. 5. Therefore, with reference to the scale lines 113, the driver can readily know the distances from the side portion (front fender) 74 of the front body 21 shown in the second reflective mirror 16 to the first and second objects 75, 76 in the blind spot.

Using the scale lines 113 allows the driver to readily ascertain the distance from the first object 75 to the second object 76 in the blind spot, and the distance from the first and second objects to the front end portion 101 of the front body 21.

### (Fifth Embodiment)

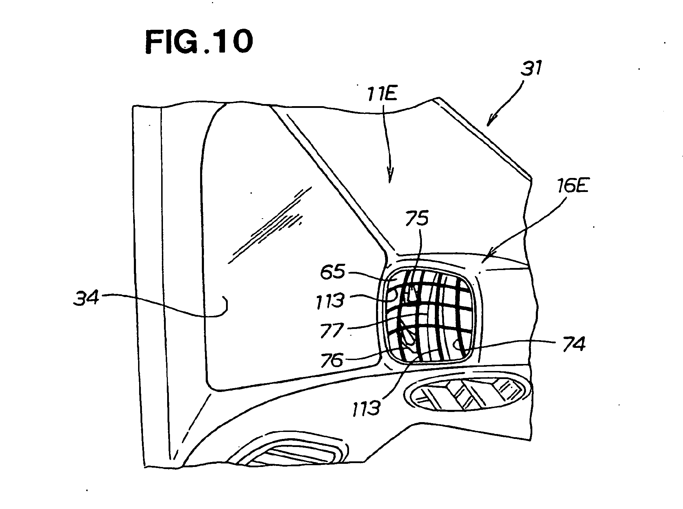

FIG. 10 shows an oblique forward vision device 11E according to a fifth embodiment. Configurations that are the same as those in the embodiments shown in FIGS. 1 to 5 and 9 have the same reference characters, and a description thereof is accordingly omitted.

The oblique forward vision device 11E according to the fifth embodiment includes a second reflective mirror 16E having scales lines 113 drawn on the reflective mirror member 65 at predetermined intervals.

The oblique forward vision device 11E according to the fifth embodiment has an advantageous effect of readily allowing the driver to ascertain distances in the same manner as in the oblique forward vision device 11D according to the fourth embodiment.

### INDUSTRIAL APPLICABILITY

The oblique forward vision device for a vehicle according to the invention can be used to drive the vehicle so as not to come into contact with obstacles located diagonally in front of the vehicle.

## Claims

1. An oblique forward vision device for a vehicle having a front pillar (31), a sub-pillar (33) extending downwardly from the front pillar (31) partway therealong in a vertical direction, and a sub-window pane (34) supported by the front pillar (31) and the sub-pillar (31), the device comprising:
a door mirror (14) disposed in a vicinity of a lower portion of the sub-pillar (33) and located rearwardly of the front pillar (31); and
a first reflective mirror (15) provided in a mirror housing (46) holding a mirror member (45) of the door mirror (14), such that an object in an area ranging from beneath the door mirror (14) to a side and front of the vehicle is shown;
**characterized by**
a second reflective mirror (16) provided at a front side end of an interior side surface (38) of the front pillar (31) such that light (84) reflected off the first reflective mirror (15) and passed through the sub-window pane (34) is reflected toward a vehicle occupant (M).

2. The oblique forward vision device of claim 1, wherein the second reflective mirror (16) is provided at a lower end portion (61) of the interior side surface (38) of the front pillar (31).

3. The oblique forward vision device of claim 1, wherein the second reflective mirror (16) includes a pivotable reflective mirror member (65).

4. The oblique forward vision device of claim 1, wherein the first reflective mirror (15) is formed by applying a mirror finish to the mirror housing (46).

5. The oblique forward vision device of claim 1, wherein the door mirror (14B) is capable of pivoting on the door and being switched between an unfolded state when the door mirror (14B) is used and a folded state when the door mirror is not used, and the first reflective mirror (15B) includes a first reflective portion (91) for showing the object when the door mirror (14B) is unfolded and a second reflective portion (92) for showing the object when the door mirror is folded.

6. The oblique forward vision device of claim 5, wherein the second reflective portion (92) has a surface shape substantially the same as the surface shape of the first reflective portion (91) and when the door mirror (14B) is folded shows substantially the same image as the first reflective portion (91) when the door mirror (14B) is unfolded.

7. The oblique forward vision device of claim 3, wherein a window alignment mark (96) is provided on the sub-window pane (34), a mirror alignment mark (97) is provided on the pivotable reflective mirror member (65) in the second reflective mirror (16C), and the second reflective mirror (16C) is positioned by pivoting the reflective mirror member (65) so that the mirror alignment mark (97) coincides with the window alignment mark (97) shown in the reflective mirror member (65).

8. The oblique forward vision device of claim 7, wherein when the window alignment mark (96) shown in the second reflective mirror (16C) coincides with the mirror alignment mark (97), the position of the superimposed marks coincides with a front end portion (101) of the vehicle shown in the second reflective mirror (16C).

9. The oblique forward vision device of claim 7, wherein an edge (111) of the second reflective mirror (16D) is used as the mirror alignment mark (97D), and the window alignment mark (96D) includes an outer frame (112) that substantially coincides with the edge (111), and a plurality of scale lines (113) drawn in the outer frame at desired intervals.

10. The oblique forward vision device of claim 2, wherein the second reflective mirror (16) is disposed within a passenger compartment (13) of the vehicle at a location where the front pillar (31) and an instrument panel (25) intersect.

## Patentansprüche

1. Schrägvorwärts-Sichtvorrichtung für ein Fahrzeug, welches eine A-Säule (31), eine Untersäule (33), die sich von der A-Säule (31) abwärts von einem Abschnitt der A-Säule in eine vertikale Richtung erstreckt, und eine Unterfensterscheibe (34) aufweist, die von der A-Säule (31) und der Untersäule (31) gestützt ist, wobei die Vorrichtung umfasst:
- einen Türspiegel (14), der in der Nähe eines unteren Abschnitts der Untersäule (33) angeordnet ist und sich hinter der A-Säule (31) befindet; und
- einen ersten reflektierenden Spiegel (15), welcher in einem Spiegelgehäuse (46) bereitgestellt ist, das ein Spiegelelement (45) des Türspiegels (14) hält, so dass ein Objekt in einem Bereich, der von unterhalb des Türspiegels (14) zu einer Seite und einem Vorderbereich von dem Fahrzeug reicht, gezeigt wird; **gekennzeichnet durch**
- einen zweiten reflektierenden Spiegel (16), der an einem Vorderseitenende einer Innenseitenfläche (38) der A-Säule (31) bereitgestellt ist, so dass von dem ersten reflektierenden Spiegel (15) reflektiertes Licht (84), welches **durch** die Unterfensterscheibe (34) hindurchgetreten ist, zu einem Fahrzeuginsassen (M) hin reflektiert wird.

2. Schrägvorwärts-Sichtvorrichtung nach Anspruch 1, wobei der zweite reflektierende Spiegel (16) an einem unteren Endabschnitt (61) der Innenseitenfläche (38) der A-Säule (31) bereitgestellt ist.

3. Schrägvorwärts-Sichtvorrichtung nach Anspruch 1, wobei der zweite reflektierende Spiegel (16) ein schwenkbares reflektierendes Spiegelelement (65) umfasst.

4. Schrägvorwärts-Sichtvorrichtung nach Anspruch 1, wobei der erste reflektierende Spiegel (15) durch Auftragen einer Spiegelschicht auf das Spiegelgehäuse (46) gebildet ist.

5. Schrägvorwärts-Sichtvorrichtung nach Anspruch 1, wobei der Türspiegel (14B) an der Tür schwenkbar ist und dazu in der Lage ist, aus einem ausgeklappten Zustand, wenn der Türspiegel (14B) verwendet wird, in einen nicht-ausgeklappten Zustand, wenn der Türspiegel nicht verwendet wird, überführt zu werden und umgekehrt, und wobei der erste reflektierende Spiegel (15B) einen ersten reflektierenden Abschnitt (91) zum Zeigen des Objektes, wenn der Türspiegel (14B) ausgeklappt ist, und einen zweiten reflektierenden Abschnitt (92) umfasst zum Zeigen des Objektes, wenn der Spiegel nicht-ausgeklappt ist.

6. Schrägvorwärts-Sichtvorrichtung nach Anspruch 5, wobei der zweite reflektierende Abschnitt (92) eine Flächengestalt aufweist, welche im Wesentlichen der Flächengestalt des ersten reflektierenden Abschnitts (91) gleich ist, und wenn der Türspiegel (14B) nicht-ausgeklappt ist, im Wesentlichen das gleiche Bild zeigt wie der erste reflektierende Abschnitt (91), wenn der Türspiegel (14B) ausgeklappt ist.

7. Schrägvorwärts-Sichtvorrichtung nach Anspruch 3, wobei eine Fensterausrichtungsmarkierung (96) an der Unterfensterscheibe (34) bereitgestellt ist, eine Spiegelausrichtungsmarkierung (97) an dem schwenkbaren reflektierenden Spiegelelement (65) in dem zweiten reflektierenden Spiegel (16C) bereitgestellt ist und der zweite reflektierende Spiegel (16C) durch Schwenken des reflektierenden Spiegelelements (65) positioniert wird, so dass die Spiegelausrichtungsmarkierung (97) mit der in dem reflektierenden Spiegelelement (65) gezeigten Fensterausrichtungsmarkierung (97) zusammenfällt.

8. Schrägvorwärts-Sichtvorrichtung nach Anspruch 7, wobei, wenn die in dem zweiten reflektierenden Spiegel (16C) gezeigte Fensterausrichtungsmarkierung (96) mit der Spiegelausrichtungsmarkierung (97) zusammenfällt, die Position der überlagerten Markierungen mit einem in dem zweiten reflektierenden Spiegel (16C) gezeigten Vorderendabschnitt (101) des Fahrzeugs zusammenfällt.

9. Schrägvorwärts-Sichtvorrichtung nach Anspruch 7, wobei ein Rand (111) des zweiten reflektierenden Spiegels (16D) als die Spiegelausrichtungsmarkierung (97D) verwendet wird und die Fensterausrichtungsmarkierung (96D) einen Außenrahmen (112), der im Wesentlichen mit dem Rand (111) zusammenfällt, und eine Mehrzahl von in dem Außenrahmen in gewünschten Abständen gezogenen Skalenlinien (113) umfasst.

10. Schrägvorwärts-Sichtvorrichtung nach Anspruch 2, wobei der zweite reflektierende Spiegel (16) in einem Fahrzeuginsassenraum (13) des Fahrzeugs an einer Stelle angeordnet ist, wo sich die A-Säule (31) und ein Instrumentenfeld (25) schneiden.

## Revendications

1. Dispositif de vision oblique vers l'avant pour un véhicule ayant un montant avant (31), un sous-montant (33) s'étendant vers le bas à partir du montant avant (31) sur une distance partielle le long de celui-ci dans une direction verticale et une vitre de montant de baie (34) supportée par le montant avant (31) et le sous-montant (33), le dispositif comprenant :
un rétroviseur extérieur (14) disposé au voisinage d'une portion inférieure du sous-montant (33) et situé vers l'arrière du montant avant (31) ; et
un premier rétroviseur réflecteur (15) prévu dans un logement de rétroviseur (46) maintenant un organe de rétroviseur (45) du rétroviseur extérieur (14), de sorte qu'un objet dans la zone allant du dessous du rétroviseur extérieur (14) à un côté et à l'avant du véhicule est montré ;
**caractérisé par**
un second rétroviseur réflecteur (16) prévu au niveau d'une extrémité latérale avant d'une surface latérale intérieure (38) du montant avant (31) de sorte que la lumière (84) renvoyée par réflexion par le premier rétroviseur réflecteur (15) et traversant la vitre de montant de baie (34) est réfléchie vers un occupant de véhicule (M).

2. Dispositif de vision oblique vers l'avant selon la revendication 1, dans lequel le second rétroviseur réflecteur (16) est prévu au niveau d'une portion d'extrémité inférieure (61) de la surface latérale intérieure (38) du montant avant (31).

3. Dispositif de vision oblique vers l'avant selon la revendication 1, dans lequel le second rétroviseur réflecteur (16) inclut un organe de rétroviseur réflecteur pivotant (65).

4. Dispositif de vision oblique vers l'avant selon la revendication 1, dans lequel le premier rétroviseur réflecteur (15) est formé par application d'un fini miroir sur le logement de rétroviseur (46).

5. Dispositif de vision oblique vers l'avant selon la revendication 1, dans lequel le rétroviseur extérieur (14B) est capable de pivoter sur la portière et d'être permuté entre un état déplié lorsque le rétroviseur extérieur (14B) est utilisé et un état replié lorsque le rétroviseur extérieur n'est pas utilisé, et le premier rétroviseur réflecteur (15B) inclut une première portion réflectrice (91) pour montrer l'objet lorsque le rétroviseur extérieur (14B) est déplié et une seconde portion réflectrice (92) pour montrer l'objet lorsque le rétroviseur extérieur est replié.

6. Dispositif de vision oblique vers l'avant selon la revendication 5, dans lequel la seconde portion réflectrice (92) a une forme de surface sensiblement identique à la forme de surface de la première portion réflectrice (91) et lorsque le rétroviseur extérieur (14B) est replié, elle montre sensiblement la même image que la première portion réflectrice (91) lorsque le rétroviseur extérieur (14B) est déplié.

7. Dispositif de vision oblique vers l'avant selon la revendication 3, dans lequel un repère d'alignement de vitre (96) est prévu sur la vitre de montant de baie (34), un repère d'alignement de rétroviseur (97) est prévu sur l'organe de rétroviseur réflecteur pivotant (65) dans le second rétroviseur réflecteur (16C), et le second rétroviseur réflecteur (16C) est positionné par pivotement de l'organe rétroviseur réflecteur (65) de sorte que le repère d'alignement de rétroviseur (97) coïncide avec le repère d'alignement de vitre (97) montré dans l'organe de rétroviseur réflecteur (65).

8. Dispositif de vision oblique vers l'avant selon la revendication 7, dans lequel lorsque le repère d'alignement de vitre (96) montré dans le second rétroviseur réflecteur (16C) coïncide avec le repère d'alignement de rétroviseur (97), la position des repères superposés coïncide avec une portion d'extrémité avant (101) du véhicule montrée dans le second rétroviseur réflecteur (16C).

9. Dispositif de vision oblique vers l'avant selon la revendication 7, dans lequel un bord (111) du second rétroviseur réflecteur (16D) est utilisé comme repère d'alignement de rétroviseur (97D), et le repère d'alignement de vitre (96D) inclut un cadre externe (112) qui coïncide sensiblement avec le bord (111), et une pluralité de graduations (113) tracées dans le cadre externe à des intervalles souhaités.

10. Dispositif de vision oblique vers l'avant selon la revendication 2, dans lequel le second rétroviseur réflecteur (16) est disposé dans un compartiment passager (13) du véhicule à l'emplacement de l'intersection entre le montant avant (31) et un tableau de bord (25).
